# FASCICULE DE BREVET EUROPEEN

(11) **EP 1 414 638 B1**
(45) Date de publication et mention de la délivrance du brevet: **22.11.2006**
(21) Numéro de dépôt: 02784867.0
(22) Date de dépôt: 12.07.2002
(51) Int. Cl.: B29C 51/02, B29B 11/14

(54) **PROCEDE ET INSTALLATION DE THERMOFORMAGE DE RECIPIENTS LIMITANT LES PERTES DE MATIERE**
VERFAHREN UND ANLAGE ZUR WÄRMEFORMUNG VON BEHÄLTERN UNTER BEGRENZUNG VON MATERIALVERLUSTEN
METHOD AND INSTALLATION FOR THERMOFORMING OF CONTAINERS LIMITING MATERIAL LOSSES

(30) Priorité: 13.07.2001 FR 0109341
(43) Date de publication de la demande: 06.05.2004
(73) Titulaire: ERCA FORMSEAL, 91940 Les Ulis Cedex (FR)
(72) Inventeur: Luc, Michel, 92290 Chantenay Malabry (FR)
(74) Mandataire: Intes, Didier Gérard André
(86) Numéro de dépôt international: PCT/FR2002/002473
(87) Numéro de publication internationale: WO 2003/006228

(56) Documents cités:
- FR-A- 1 252 029
- US-A- 4 086 045

## Description

La présente invention concerne un procédé de thermoformage de récipients dans une bande de matériau thermoplastique avancée pas à pas, dans lequel on thermoforme dans la bande au moins deux récipients qui sont disposés côte à côte en étant séparés par une zone de déchets.

Par exemple, on thermoforme dans la bande au moins une première et une deuxième rangées de récipients, qui comprennent chacune au moins un récipient et qui sont séparées par une zone de déchets.

Si l'on considère deux rangées disposées chacune transversalement à la direction d'avancement de la bande, alors la zone de déchets est elle-même disposée transversalement.

Si l'on considère deux rangées longitudinales disposées chacune parallèlement à la direction d'avancement, alors la zone de déchets est disposée longitudinalement.

Par exemple, on thermoforme à chaque pas de temps une série de récipients alignés transversalement. Ainsi, les rangées transversales sont thermoformées à deux pas d'avancement successifs, tandis que, à chaque pas d'avancement, un récipient de chaque rangée longitudinale est thermoformé.

Lorsque l'on thermoforme des récipients dans une bande de matériau thermoplastique, on cherche à limiter autant que possible les pertes de matériau. Ainsi, les récipients sont pratiquement disposés bord à bord de manière à réduire autant que possible les zones de déchets et à limiter les prix de revient. Dans certains cas, les contraintes de fabrication sont telles que les zones de déchets présentent des dimensions non négligeables. C'est en particulier le cas lorsque les récipients présentent une forme nécessitant un thermoformage à contre-dépouille, par exemple une forme légèrement évasée vers le bas. Dans ce cas, pour le démoulage des récipients après leur thermoformage, il est nécessaire d'écarter légèrement les moules qui sont alors réalisés en au moins deux parties. Bien entendu, cet écartement n'est possible que si le débattement suffisant est laissé autour des récipients, de sorte que ceux-ci ne sont plus fabriqués bord à bord et que les zones de déchets ont des dimensions non négligeables. Cette contrainte occasionne des pertes substantielles en matériau thermoplastique et augmente en conséquence les prix de revient.

Un procédé selon le préambule de la revendication 1 est connu par US 4 086 045 qui préconise de refroidir les zones minces pour favoriser le maintien de la bande. En particulier, ces zones minces sont déformées en forme de vagues. Ce document ne s'intéresse pas à la limitation des pertes de matériau thermoplastique.

FR 1 252 029 concerne la fabrication d'une plaque ou d'une feuille à partir de laquelle des boîtiers pourront être fabriqués, notamment par étirage. Selon ce document, cette plaque ou cette feuille est fabriquée de telle sorte qu'elle présente initialement des épaisseurs de paroi différentes prévues dans des zones où, lors de la fabrication des boîtiers par étirage, une quantité de matière plus petite ou plus grande est nécessaire.

La présente invention vise à surmonter les inconvénients précités en limitant les pertes de matériau thermoplastique même lorsque les contraintes de fabrication nécessitent des zones de déchets de dimensions non négligeables.

Ce but est atteint grâce au procédé défini dans la revendication 1.

L'épaisseur de la bande dans les zones épaisses est celle qui, considérant le matériau thermoplastique utilisé permet, après un étirement suffisant de la bande pour définir la géométrie des récipients, de donner aux parois de ceux-ci l'épaisseur souhaitée.

L'invention part du constat que, dans les zones de déchets, il n'est pas nécessaire de disposer d'une bande de matériau thermoplastique aussi épaisse que dans les zones dans lesquelles les récipients sont thermoformés.

L'invention met à profit la capacité de la bande de matériau thermoplastique à être étirée, en étirant la zone de déchets. Une zone mince est ainsi formée et, lors de l'étirement ou après, les zones épaisses situées de part et d'autre de cette zone mince sont écartées, de sorte que la zone mince est sensiblement disposée dans le plan général de la bande avant le thermoformage. Le deuxième récipient peut ainsi être thermoformé alors que la zone de déchets présente des dimensions suffisantes pour lui permettre de répondre aux contraintes de fabrication exposées ci-dessus bien que, en réalité, elle ne représente qu'une partie de la bande thermoplastique ayant initialement des dimensions bien moindres. Les pertes de matériau correspondent à cette partie de petites dimensions. La quantité de matériau thermoplastique perdue dans les zones minces de déchets est donc limitée.

Par exemple, la bande de matériau thermoplastique présente initialement une épaisseur sensiblement constante, déterminée pour permettre le thermoformage, dans cette bande, de récipients ayant une forme déterminée. Par exemple, plus le rapport de la profondeur des récipients à leur section est important, plus l'épaisseur de la bande doit être importante.

On peut utiliser une bande ayant des rubans minces et des rubans épais (par exemple longitudinaux) et étirer localement la bande pour former des zones minces (par exemple transversales).

Les rubans minces et les zones minces forment alors un quadrillage de zones de déchets minces.

Comme on le verra dans la suite, on peut également, à partir d'une bande d'épaisseur sensiblement constante, former par étirement des zones minces disposées transversalement et/ou longitudinalement.

Avantageusement, on thermoforme au moins une première et une deuxième rangées transversales ayant au moins un récipient chacune dans deux zones épaisses de la bande, qui s'étendent transversalement au sens d'avancement de la bande et qui sont séparées par une zone mince transversale.

Dans ce cas, avantageusement, on thermoforme les première et deuxième rangées dans deux positions successives de la bande, c'est-à-dire qu'on thermoforme au moins la première rangée, on fait avancer la bande selon un pas d'avancement et on thermoforme au moins la deuxième rangée de telle sorte que les première et deuxième rangées soient séparées par une zone de déchets étirée formant la zone mince transversale.

Selon un mode de réalisation préférentiel, pour former une zone mince, on réalise une étape d'étirage en pinçant une première et une deuxième région de la bande, situées de part et d'autre d'une zone de déchets à étirer et en écartant lesdites première et deuxième régions l'une de l'autre.

Ceci constitue une manière simple de réaliser l'étirement.

Avantageusement, lors de l'étape d'étirage, on écarte les première et deuxième régions de la bande l'une de l'autre en maintenant la deuxième région fixe et en déplaçant la première région.

Selon une première variante, on étire la bande de matériau thermoplastique dans le sens d'avancement de ladite bande, c'est-à-dire dans le sens de sa longueur, tandis que sa dimension en largeur n'est pas modifiée. La zone mince étirée est alors orientée transversalement. Par exemple, la longueur de la zone de déchets étirée est égale à 2 à 10 fois sa longueur avant étirement.

Ainsi, pour former une zone mince transversale à chaque pas d'avancement de la bande, les première et deuxième régions pincées sont respectivement situées en amont et en aval de la zone de déchets à étirer par rapport au sens d'avancement de la bande et on les écarte l'une de l'autre dans la direction longitudinale de la bande.

Pour l'étirement, la première région est avantageusement tirée vers l'amont tandis que la deuxième région, qui est à l'aval, reste fixe. Ainsi, la tension de toute la portion de la bande qui se situe en aval de la deuxième région n'est pas affectée par l'opération d'étirement, de sorte que, sur cette portion, les opérations de thermoformage de la bande sont réalisées de manière classique.

Avantageusement, lors d'un avancement de la bande, on fait avancer les deux régions selon des courses différentes, la course d'avancement de la deuxième région (celle qui est en aval) étant supérieure à la course d'avancement de la première région (celle qui est en amont). Cet avancement peut s'opérer sur pas d'avancement de la bande, la course d'avancement de la deuxième région étant égale à un pas d'avancement.

De préférence, l'étape d'étirage est réalisée en temps masqué par rapport aux différentes étapes du procédé de thermoformage.

Ainsi, les cadences de fabrication ne sont pas affectées par l'étape d'étirage.

Avantageusement, pour étirer une zone de déchets pour former une zone mince, on chauffe ladite zone (avant et/ou pendant l'étirage).

L'étirement est rendu plus aisé en profitant du caractère thermoplastique de la bande. Par exemple, la température à laquelle est portée la zone de déchets pour réaliser l'étirement est sensiblement la même que la température à laquelle est portée la bande pour réaliser l'opération de thermoformage des récipients.

Avantageusement, on refroidit ensuite la zone étirée pour la stabiliser.

Dans les exemples qui viennent d'être décrits, l'étirement est réalisé dans le plan de la bande, de sorte que les zones épaisses situées de part et d'autre de la zone mince obtenue par étirement sont écartées l'une de l'autre lors de l'étirement.

Une autre possibilité pour réaliser l'étirement consiste à pincer la bande de part et d'autre de la zone de déchets à étirer, à étirer la bande entre les zones de pincement en la déformant par rapport à son plan et à ramener la zone déformée dans le plan de la bande en augmentant en conséquence l'écartement entre les deux zones de pincement.

Cette autre possibilité peut être mise à profit pour, selon une deuxième variante, étirer la zone de déchets dans le sens de la largeur de la bande, de sorte que la zone mince étirée est orientée longitudinalement. Il suffit pour cela que les zones de pincement soient orientées longitudinalement et que, après la déformation et le relâchement du pincement, la bande soit ramenée à plat en écartant ses bords longitudinaux avant de subir l'étape de thermoformage des récipients.

L'invention concerne également une installation pour thermoformer des récipients comprenant des moyens pour faire avancer pas à pas une bande de matériau thermoplastique et une station de thermoformage apte à thermoformer dans la bande au moins deux récipients disposés côte à côte en étant séparés par une zone de déchets.

Une installation conforme au préambule de la revendication 14 est connue de US 4 086 045, déjà évoqué ci-dessus.

Comme indiqué précédemment, les contraintes de fabrication sont parfois telles qu'il est nécessaire de disposer, autour des récipients, de portions de bande de dimensions suffisantes, par exemple pour réaliser un thermoformage avec des contre-dépouilles. L'invention vise à proposer une installation de thermoformage qui permette d'éviter que cette nécessité ne soit la cause de pertes de matières excessives.

Ce but est atteint grâce au fait que l'installation de l'invention comporte, disposés en amont de la station de thermoformage dans le sens d'avancement de la bande, des moyens pour étirer localement la bande de manière à former au moins une zone mince entre des zones épaisses dont l'épaisseur est supérieure à celle de la zone mince et pour augmenter l'écartement entre ces zones épaisses et au fait qu'elle comporte des moyens pour thermoformer les récipients dans les zones épaisses en préservant la zone de déchets dans une zone mince.

L'installation est apte à entraîner pas à pas une bande thermoplastique ayant, en alternance, des rubans épais et des rubans minces et la station de thermoformage est apte à ne thermoformer les récipients que dans les rubans épais.

Avantageusement, l'installation comporte, disposés en amont de la station de thermoformage dans le sens d'avancement de la bande, des moyens pour étirer localement la bande de manière à former des zones minces correspondant à des zones de déchets.

Les moyens pour étirer localement la bande permettent de réduire la quantité de matière thermoplastique présente dans les zones étirées, tout en rendant disponible dans la station de thermoformage une zone de déchets de dimension suffisante pour permettre, par exemple, un thermoformage avec contre-dépouille.

Avantageusement, l'installation comporte, en outre, des moyens pour chauffer la zone de déchets disposés, dans le sens allant vers l'aval, tout au plus au niveau des moyens pour étirer localement la bande.

Avantageusement, l'installation comporte, en outre, des moyens pour refroidir la zone de déchets disposés vers l'aval des moyens pour étirer localement la bande.

En refroidissant la zone de déchets en aval des moyens pour étirer cette zone, on fait en sorte que cette dernière ne présente pas une tendance à la déformation trop importante dans la ou les stations de l'installation qui suivent la station d'étirement.

Avantageusement, la station de thermoformage est apte à thermoformer lesdites première et deuxième rangées dans deux positions successives de la bande.

Avantageusement, les moyens pour étirer localement la bande comprennent une station d'étirement qui comporte un premier et un deuxième poste de pincement aptes à pincer la bande de part et d'autre d'une zone de déchets et des moyens pour déplacer lesdits postes l'un par rapport à l'autre.

Selon une première variante, la zone de déchets considérée s'étend transversalement à la bande et est étirée dans le sens de la longueur de cette dernière. Pour cela, avantageusement, les premier et deuxième postes de pincement sont disposés transversalement à la direction d'avancement de la bande, respectivement en amont et en aval de la zone à étirer et les moyens pour déplacer les postes de pincement l'un par rapport à l'autre sont aptes à déplacer le premier poste de pincement vers l'amont alors que le deuxième poste de pincement reste fixe par rapport à la bande.

Par exemple, le premier poste de pincement est apte à être déplacé vers l'amont tandis que le deuxième poste de pincement reste fixe par rapport à la bande. Les premier et deuxième postes de pincement peuvent être aptes à être déplacés simultanément, le premier poste de pincement étant déplacé vers l'aval sur une course inférieure à la course de déplacement du deuxième poste de pincement vers l'aval. Dans ce denier cas, le déplacement simultané intervient avantageusement lors d'un pas d'avancement de la bande, le deuxième poste de pincement étant déplacé sur une course égale au pas d'avancement tandis que le premier poste de pincement est déplacé sur une course moindre.

Avantageusement, les moyens d'actionnement et de déplacement des postes de pincement sont commandés de manière à opérer simultanément avec les opérations de thermoformage, de manière à réaliser l'opération d'étirement en temps masqué par rapport à ladite opération de thermoformage.

Une autre possibilité avantageuse consiste à prévoir que la station d'étirement comprenne des moyens pour étirer la bande en la déformant par rapport à son plan, qui sont disposés de manière à pouvoir déformer la zone de déchets entre les régions de la bande pincées par les moyens de pincement, et des moyens pour ramener la zone déformée dans le plan de la bande.

Dans ce cas, selon la disposition des postes de pincement, la zone mince obtenue par étirement peut être orientée transversalement et/ou longitudinalement par rapport à la bande.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique générale d'une installation conforme à l'invention permettant de mettre en oeuvre le procédé de l'invention ;
- les figures 2 à 5 montrent, selon une première variante, la station d'étirement de cette installation, dans les différentes étapes du procédé d'étirement ;
- les figures 6 à 9 illustrent, selon une deuxième variante, la station d'étirement de l'installation en montrant les différentes étapes du procédé d'étirement ;
- les figures 10 et 11 montrent une possibilité d'étirement transversal de la bande pour former des zones minces longitudinales ; et
- la figure 12 montre l'aspect de la buse d'extrusion d'une ligne d'extrusion servant à fabriquer une bande ayant une alternance de rubans épais et de rubans minces.

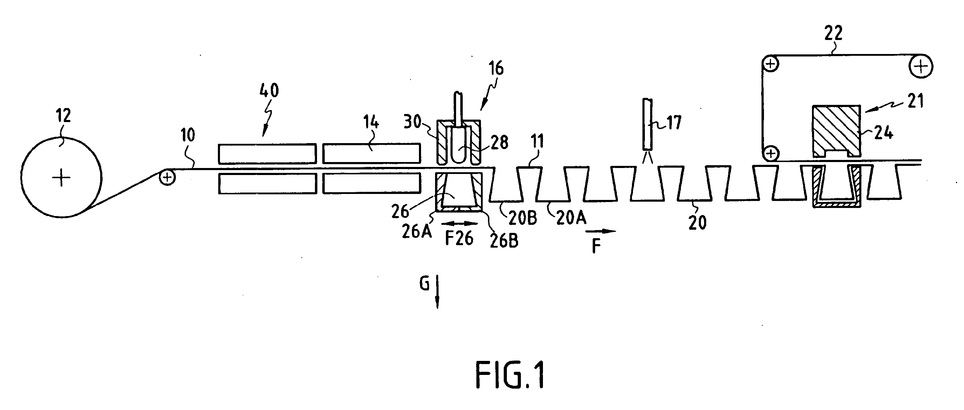

L'installation de la figure 1 sert à thermoformer les récipients 20 à partir d'une bande thermoplastique 10. Dans l'exemple représenté, elle sert également à remplir ces récipients avec un produit tel qu'un produit liquide, pâteux ou gélatineux (en particulier un produit alimentaire) et à fermer les récipients remplis.

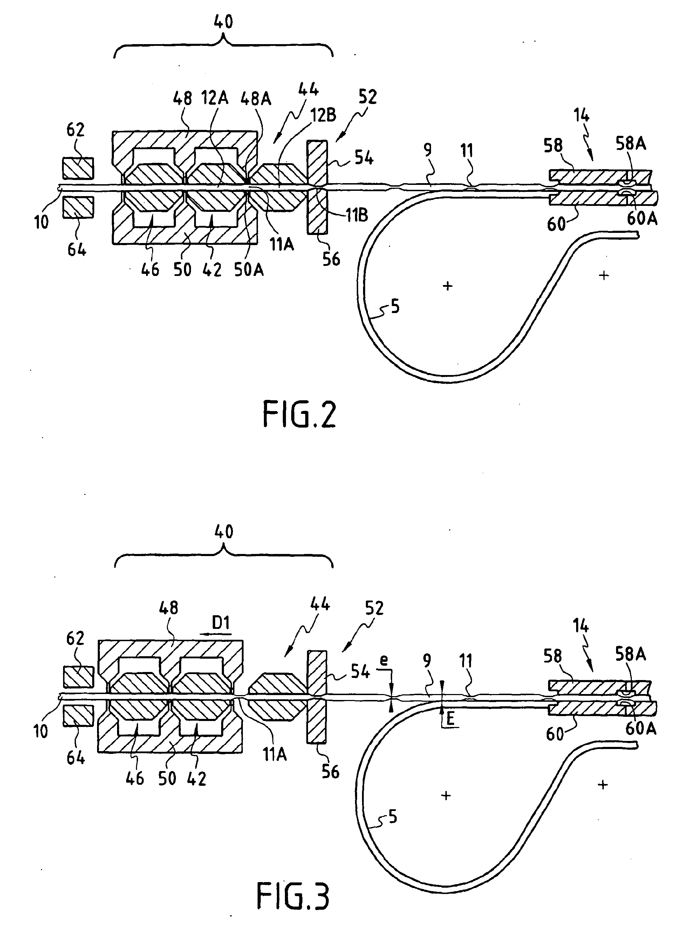

Cette installation comporte une bobine 12 à partir de laquelle est déroulée la bande thermoplastique 10 qui traverse, en général horizontalement, toute l'installation en étant entraînée pas à pas par des moyens de soutien et d'entraînement (convoyeur 5 indiqué sur les figures 2 à 5). Dans toute la suite, le sens de l'amont vers l'aval désigné par la flèche F doit être entendu comme désignant le sens d'avancement de la bande à travers les diverses stations successives de l'installation.

Ainsi, dans le sens de la flèche F, l'installation comporte successivement une boîte de chauffe 14 qui sert à porter la bande thermoplastique à la température de thermoformage, une station de thermoformage 16 dans laquelle les récipients sont thermoformés et, éventuellement, banderoles, une station de dosage et de remplissage des récipients 17 et une station 21 de fermeture des récipients dans laquelle une bande à couvercle 22 est disposée sur l'extrémité supérieure ouverte des récipients et scellée sur ces derniers à l'aide d'un outil de scellement 24. En aval de la station 21, l'installation comporte classiquement une station de découpe des récipients à partir de la bande puis une station de conditionnement et de palettisation des récipients découpés par groupes ou individuellement.

La station de thermoformage 16 permet de thermoformer des récipients disposés selon au moins une rangée orientée transversalement par rapport au sens d'avancement F de la bande. En l'espèce, cette station comporte une seule rangée d'outils de thermoformage qui comprennent chacun une chambre de thermoformage 26 disposée sous la bande et un piston de thermoformage 28 disposé au-dessus. Pour le thermoformage, la bande est pincée entre les extrémités supérieures des parois des chambres 26 et un cylindre de pincement 30, et le piston 28 est descendu dans les chambres de thermoformage.

Après une étape de thermoformage, pour permettre l'avancement de la bande 10, il est nécessaire de démouler les récipients. Pour cela, le piston 28 et le cylindre 30 sont déplacés vers le haut, de manière à s'écarter du trajet d'avancement de la bande, tandis que les chambres de thermoformage 26 sont abaissées dans le sens de la flèche G sur une hauteur permettant aux fonds des récipients d'échapper à leurs bords supérieurs.

Comme on le voit sur la figure 1, les chambres de thermoformage 26 présentent une forme à contre-dépouille. Par exemple, elles vont en s'évasant vers le bas. Une forme à contre-dépouille pourrait également être obtenue avec des chambres ayant sensiblement une forme sphérique de sorte que, sur la moitié supérieure des récipients, une contre-dépouille soit formée.

On comprend que, pour le démoulage des récipients qui viennent d'être thermoformés, il est nécessaire d'écarter les parois des chambres de thermoformage d'une valeur au moins égale à l'amplitude de la contre-dépouille.

Ainsi, les parois des chambres 26 comprennent deux parties, respectivement 26A et 26B, aptes à être écartées l'une de l'autre selon la double flèche F26 à la fin du thermoformage, de manière à délimiter entre elles des dimensions diamétrales minimales au moins égales aux dimensions diamétrales maximales des récipients.

Pour permettre cet écartement des parois des chambres, il est nécessaire de disposer, autour des récipients, du débattement nécessaire. En particulier, il est nécessaire que la demi-paroi aval 26B puisse se déplacer dans le sens F vers la rangée de récipients 20B immédiatement située à l'aval de la station de thermoformage sur une course suffisante pour permettre le démoulage. Il en résulte que les récipients ne sont pas disposés bord à bord, mais que des zones de déchets 11 de dimensions relativement importantes séparent les unes des autres les diverses rangées de récipients, comme on l'a indiqué entre la rangée 20B et la rangée 20A située à son aval.

Il faut noter que la figure 1 représente une installation en vue de côté, le long de la direction d'avancement de la bande dans l'installation. Les contre-dépouilles des chambres de thermoformage sont visibles sur cette figure, mais des contre-dépouilles peuvent également être présentes dans la direction transversale à la direction d'avancement de la bande. C'est en particulier le cas lorsque les récipients ont une forme sensiblement sphérique. Dans ce cas, au sein d'une rangée de récipients, un espacement entre les récipients est éventuellement nécessaire dans la direction transversale à la bande pour permettre l'ouverture suffisante des chambres de thermoformage afin de permettre le démoulage des récipients. Les parois des chambres de thermoformage peuvent éventuellement comporter quatre parties mobiles les unes par rapport aux autres.

Lorsque les récipients présentent une contre-dépouille plus importante dans une direction, on peut s'arranger pour orienter les chambres de thermoformage de sorte que cette direction soit la direction d'avancement de la bande dans l'installation.

De manière générale, on s'arrange avantageusement pour que les zones de déchets soient plus grandes dans la direction d'avancement de la bande puisque, comme on le verra dans la suite, c'est dans cette direction qu'est aisément réalisé l'étirement de ces zones avec la première variante présentée ci-après.

Ainsi, l'installation selon l'invention comporte une station d'étirement 40 qui est disposée en amont de la station de thermoformage 16. Dans l'exemple représenté, la station d'étirement est même, comme c'est avantageusement le cas, disposée en amont de la boîte de chauffe 14.

On décrit maintenant les figures 2 à 5. On voit sur ces figures que, en aval de la station d'étirement 40, la bande de matériau thermoplastique 10 présente des zones de déchets 11 dans lesquelles son épaisseur e est moindre que l'épaisseur E qu'elle présente dans des zones dites zones à récipients 9, dans lesquelles les récipients sont thermoformés. A chaque pas d'avancement de la bande, au moins une zone de déchets étirée 11 est formée entre deux zones à récipient 9 successives.

Sur la figure 2, la station d'étirement est représentée au début du processus d'étirement d'une zone de déchets 11A non encore étirée. La station comporte au moins un premier poste de pincement 42 qui est disposé en amont de cette zone 11A et un deuxième poste de pincement 44 qui est disposé en aval de ladite zone. Ces postes comprennent chacun un outil inférieur et un outil supérieur qui sont rapprochés l'un de l'autre pour pincer la bande et qui sont écartés l'un de l'autre pour libérer l'avancement de la bande. Dans l'exemple représenté, les moyens de pincement comprennent un poste de pincement amont supplémentaire 46 qui est disposé en amont du poste 42, qui a la même conformation que ce dernier et qui est commandé avec lui.

Si l'on compare les figures 2 et 3, on voit que la zone de déchets 11A est étirée en déplaçant l'un par rapport à l'autre le poste de pincement amont 42 et le poste de pincement aval 44. Plus précisément, l'ensemble des postes amont 42 et 46 a été déplacé vers l'amont, selon la flèche D1, tandis que le poste de pincement aval 44 est resté fixe par rapport à la bande. Ainsi, la zone de déchets 11A est étirée et son épaisseur diminue. Les moyens pour réaliser ce déplacement ne sont pas représentés, mais ils comprennent tout moyen de déplacement connu, du type couramment utilisé pour assurer le déplacement des divers outils d'une station de thermoformage, par exemple un système de vérin hydraulique ou pneumatique, ou bien un moteur, par exemple un moteur électrique, ou autre.

Comme on le verra dans la suite, la commande de ces moyens de déplacement est cadencée en fonction du cadencement général de l'installation, notamment le cadencement des opérations de thermoformage.

Avantageusement, l'installation comporte également des moyens pour chauffer la zone de déchets avant son étirement. Dans l'exemple représenté, ces moyens comprennent des outils de chauffe supérieur et inférieur, 48 et 50, qui sont aptes à chauffer la zone de déchets 11A en amont du poste de pincement aval 44. Les temps de chauffe nécessaires pour porter la bande à une température permettant sa déformation thermoplastique sont parfois supérieurs à la durée d'un stationnement de la bande entre deux pas d'avancement successifs. Par conséquent, dans l'exemple représenté, outre le premier outil supérieur 48A et le premier outil inférieur 50A qui sont disposés entre les postes de pincement 42 et 44, les moyens pour chauffer la zone de déchets comprennent les deuxièmes outils supérieur et inférieur qui sont disposés entre les postes de pincement 42 et 46 et les troisièmes outils supérieur et inférieur qui sont disposés en amont du poste 46.

L'installation comporte également des moyens pour refroidir la zone de déchets 11A après son étirement. Ainsi, un poste de refroidissement 52 est disposé immédiatement en aval du poste de pincement aval 44. Ce poste de refroidissement comprend dans l'exemple représenté des outils de refroidissement supérieur et inférieur, 54, 56, qui pincent entre eux une zone de déchets étirée et qui la refroidissent. Par exemple, ces outils sont eux-mêmes refroidis par circulation d'un fluide de refroidissement au voisinage de leurs extrémités actives. Les moyens de refroidissement peuvent faire partie de la station d'étirement, auquel cas ils sont disposés dans sa région aval, ou être disposés à la sortie de cette station, en aval de cette dernière.

En étant refroidie à la sortie de la station d'étirement, la zone de déchets étirée est stabilisée et n'a plus tendance à s'étirer lors de l'avancement de la bande thermoplastique 10 entre les différentes stations de l'installation.

De plus, comme on le voit notamment sur la figure 2, la boîte de chauffe 14 qui est disposée en amont de la station de thermoformage 16 comporte avantageusement des moyens pour limiter le chauffage de la bande dans les zones de déchets 11 étirées par rapport aux autres parties de la bande. Ainsi, cette boîte de chauffe comprend des plaques de chauffe inférieure et supérieure 58 et 60 qui sont destinées à porter les zones à récipients 9 de la bande à une température permettant leur déformation thermoplastique pour le thermoformage des récipients. Par exemple, ces plaques de chauffe viennent directement au contact des zones 9.

En revanche, dans les régions correspondant aux zones de déchets étirées, la boîte de chauffe présente des moyens pour limiter le chauffage. Par exemple, elle peut comporter une matière thermiquement isolante qui évite le chauffage des zones de déchets de la bande située en regard de cette matière. Il est également possible, comme dans l'exemple représenté, que les plaques de chauffe présentent des renfoncements 58A et 60A destinés à se trouver en regard des zones de déchets étirées. Grâce à ces renfoncements, les plaques de chauffe sont localement distantes des zones de déchets étirées.

La station d'étirement comporte encore des pinces de maintien 62, 64, qui sont disposées en amont de ladite station et dont on précisera le rôle ci-après.

En référence aux figures 2 à 5, on décrit maintenant les différentes phases du processus d'étirement réalisé dans la station d'étirement 40.

La figure 2 montre la bande 10 immobile, les opérations classiques de fabrication de récipients par thermoformage étant réalisées en aval de la station d'étirement 40. Dans cette dernière, les postes de pincement 42 et 44 (et éventuellement 46) pincent des zones 12A et 12B de la bande respectivement situées en amont et en aval de la zone de déchets 11A à étirer. Dans le même temps, le poste de refroidissement 52 refroidit une zone de déchets 11 B qui vient d'être étirée. Dans cette situation, la bande étant immobile, la boîte de chauffe est refermée sur des zones à récipients 9 situées en aval de la station 40. Les outils de chauffe 48 et 50 chauffent quant à eux au moins la zone de déchets 11A à étirer. Ils sont donc fixes par rapport à la bande.

Pour passer à la phase représentée sur la figure 3, le poste de pincement amont 42. (également le poste 46) a été déplacé vers l'amont de la bande, dans le sens D1, tandis que l'outil de pincement aval 44 est resté fixe sur la bande. Pendant ce temps, la zone de déchets 11 B continue d'être refroidie par le poste de refroidissement 52. La course du déplacement du ou des postes amont 42, 46 selon le sens D1 définit la longueur d'étirement dans la zone de déchets 11A. Par exemple, la longueur de la zone de déchets après étirement est de l'ordre de 2 à 6 fois la longueur qu'elle présentait avant étirement. Ainsi, l'épaisseur e peut être comprise entre le sixième et la moitié de l'épaisseur E ; elle est par exemple sensiblement égale à l'épaisseur des parois des récipients après leur thermoformage.

Pendant cette phase d'étirement, les outils de chauffe 48 et 50 continuent de chauffer la zone de la bande devant l'être. Durant cette phase, les pinces de maintien amont 62 et 64 sont ouvertes pour éviter de gêner le déplacement vers l'amont de la partie de la bande qui est située en amont du poste 44. En amont, la bande peut être maintenue sous tension par des galets tendeurs. Toute la région de la bande qui est située en aval de la zone de déchets étirée 11A est immobile et la boîte de chauffe 14 continue d'être fermée pendant la phase d'étirement qui se produit entre l'état de la figure 2 et celui de la figure 3.

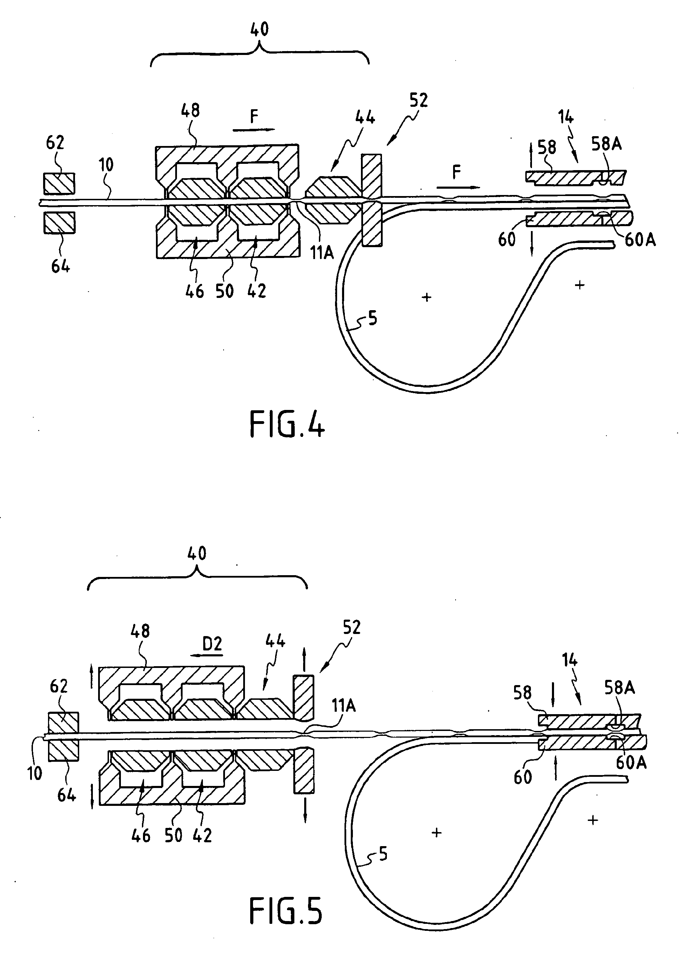

Dans la phase suivante représentée sur la figure 4, la boîte de chauffe s'est ouverte pour permettre l'avancement de la bande thermoplastique selon un pas d'avancement.

Avantageusement, la station d'étirement 40 est apte, lors d'un pas d'avancement de la bande, à accompagner le déplacement de cette bande sur au moins une partie du pas d'avancement. C'est ce que montre la figure 4, sur laquelle on voit que la station d'étirement s'est déplacée avec la bande dans la direction F.

En d'autres termes, lors de l'avancement de la bande, les postes de pincement 42 et 44, de même que le poste de pincement 46 s'il est présent, que les outils de chauffe 48 et 50 et que le poste de refroidissement 52 sont restés fixes par rapport à la bande dont ils ont accompagné le déplacement dans le sens F. Les pinces de maintien 62 et 64 sont restées ouvertes pour permettre l'avancement de la bande. La situation de la figure 3 correspond également au démoulage des corps des récipients de la station de thermoformage, de sorte que les chambres de thermoformage sont en position basse pour permettre l'avancement de la bande sur la figure 4.

Selon une variante très avantageuse, les phases de déplacement des figures 3 et 4 sont regroupées.

Plus précisément, selon cette variante, les postes amont 42 (et 46 s'il est présent) et aval 44 sont déplacés simultanément lors d'un pas d'avancement de la bande, mais le poste aval 44 est déplacé vers l'aval sur une course égale au pas d'avancement de la bande, tandis que le poste amont 42 (et 46 s'il est présent) est seulement déplacé sur une course égale au pas d'avancement diminué de la largeur d'étirement (égale à la longueur, mesurée selon la direction d'avancement de la bande d'une zone mince 11).

Sur la figure 5, la boîte de chauffe 14 s'est refermée et une phase de thermoformage recommence dans la station de thermoformage. Dans le même temps, l'ensemble de la station d'étirement 40 est ouvert et est déplacé vers l'amont de la bande comme l'indique la flèche D2. Pour permettre le maintien de la bande pendant cette phase de déplacement, les pinces de maintien 62 et 64 ont été refermées. Le poste de pincement aval 44 et le poste de refroidissement 52 se déplacent selon le sens D2 sur une distance égale à un pas d'avancement de la bande, de manière à venir placer le poste de refroidissement 52 en regard de la zone de déchets 11A de la bande qui vient d'être étirée. Le poste de pincement amont 42, de même que les outils de chauffe 48 et 50 qui sont avantageusement solidaires de son déplacement et que le deuxième poste de pincement amont 46 se déplacent quant à eux dans la direction D2 sur une course égale au pas d'avancement de la bande, diminué de la course qui leur était nécessaire à l'étirement de la zone de déchets 11A, pour passer de la situation de la figure 2 à celle de la figure 3. Ainsi, l'ensemble de la station d'étirement peut être refermé sur la bande en étant placé correctement par rapport à elle, et un nouveau cycle d'étirement peut recommencer.

Le fait de permettre à la station d'étirement 40 d'accompagner le déplacement de la bande sur au moins une partie d'un pas d'avancement de cette dernière permet, pendant un laps de temps déterminé, de maintenir écartées les première et deuxième régions de la bande respectivement pincées par les postes de pincement amont 42 et aval 44 après avoir réalisé l'étirement. Ce laps de temps est avantageusement égal au laps de temps nécessaire pour l'avancement de la bande selon un pas d'avancement. Ceci permet d'une part de stabiliser l'étirement et de synchroniser la cinématique des différents organes de la station d'étirement avec celle des différents outils de l'installation de thermoformage (outil de thermoformage, de remplissage des récipients, de scellement et de découpe).

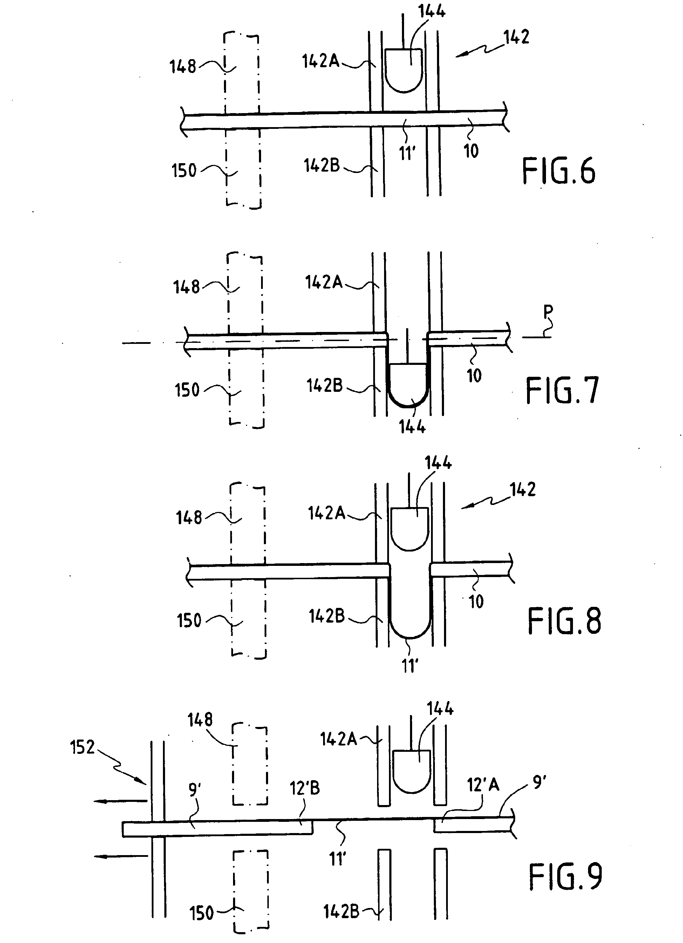

Les figures 6 à 9 montrent une variante pour la station d'étirement, comprenant un poste d'étirement 140. Ces figures sont des coupes schématiques sensiblement perpendiculaires au plan de la bande thermoplastique 10.

Le poste d'étirement 140 peut être disposé de manière à réaliser un étirement local de la bande dans le sens transversal, auquel cas la zone mince qui en résulte est orientée longitudinalement, ou au contraire de manière à réaliser un étirement local de la bande dans le sens longitudinal, auquel cas la zone mince obtenue est orientée transversalement.

Le poste 140 comprend des moyens de pincement 142 ayant un outil supérieur 142A et un outil inférieur 142B aptes à être rapprochés ou éloignés l'un de l'autre. Ces outils de pincement définissent deux plans parallèles entre lesquels est ménagé un espace dans lequel un piston de déformation 144 peut être déplacé sensiblement perpendiculairement au plan P de la bande pour réaliser l'étirement de la zone de déchets à étirer.

La figure 6 montre la situation dans laquelle la bande est pincée de part et d'autre de la zone de déchets 11 à étirer par les outils de pincement, et dans laquelle le piston 144 est écarté de la bande avant de réaliser l'étirage.

Sur la figure 7, le piston s'est déplacé de manière à déformer en l'étirant la zone de déchets 11' en la repoussant par rapport au plan P de la bande. Vue en coupe, cette déformation se rapproche de celle qui se produit lors du thermoformage des récipients. La figure 7 montre le piston en fin de course dans l'espace ménagé entre les outils de pincement.

Sur la figure 8, on a ramené le piston 144 dans sa position initiale écartée de la bande qui est toujours pincée de part et d'autre de la zone de déchets 11' étirée par les outils de pincement.

Sur la figure 9, ces outils de pincement ont été écartés l'un de l'autre et sont éloignés de la bande. La zone de déchets 11' déformée par étirement qui, sur la figure 8, n'était plus dans le plan de la bande, a été ramenée dans ce plan et l'écartement entre les régions 12'A et 12'B qui ont subi le pincement par les outils de pincement a été augmenté en conséquence. Pour ce faire, des moyens de préhension et de traction de la bande peuvent être utilisés. II s'agit par exemple d'une pince 152 ayant deux mâchoires susceptibles d'être écartées ou rapprochées pour pincer ou non la bande, et également susceptible d'être déplacée dans le plan de la bande pour ramener la zone de déchets étirée dans ce plan. Lorsque le poste d'étirement 140 est disposé transversalement par rapport à la bande, l'outil de préhension 152 peut par exemple être situé en amont de ce poste et être déplacé vers l'amont pour effectuer l'opération de traction précédemment évoquée. Deux zones épaisses à récipients 9' subsistent de part et d'autre de la zone mince étirée 11'.

Le passage de la situation de la figure 8 à celle de la figure 9 s'opère avant la stabilisation de la déformation, en particulier alors que la zone étirée 11' est chaude. La déformation de la bande par le piston 144 et l'opération consistant à ramener la zone déformée 11' dans le plan de la bande se font alors que cette zone est chaude. D'ailleurs, le piston 144 peut être un piston chauffant. Eventuellement, en aval du poste d'étirement 140, des moyens pour refroidir la zone de déchets étirée et ramenée dans le plan de la bande peuvent être prévus.

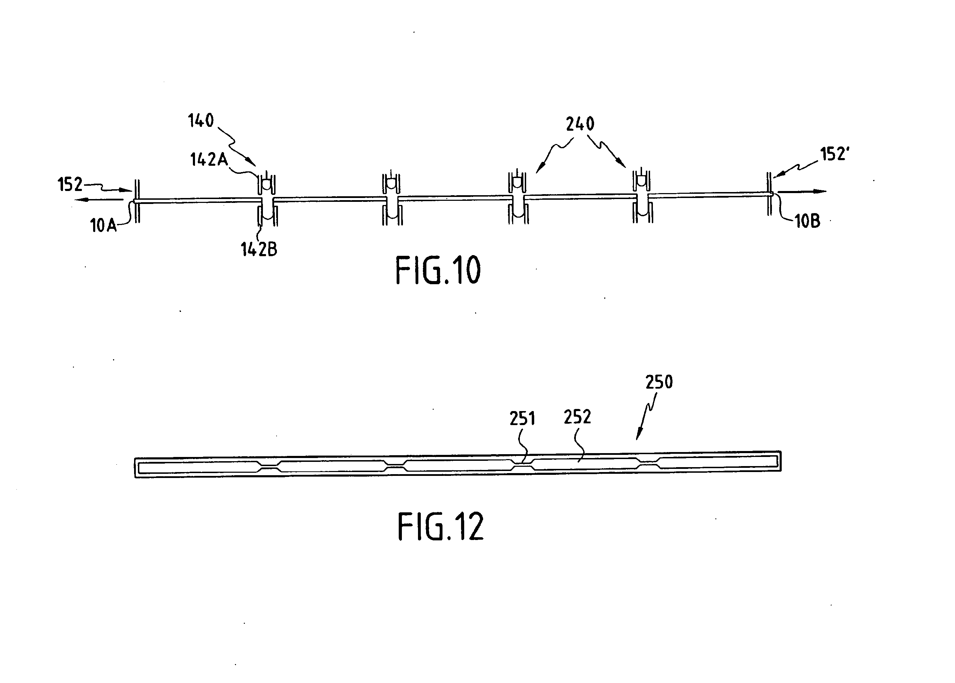

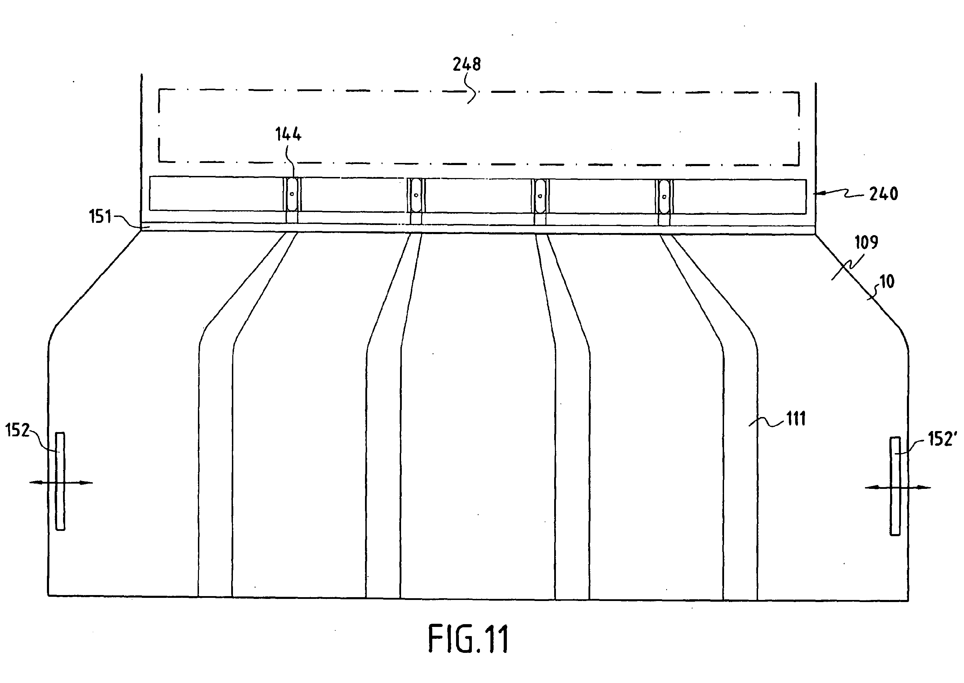

Les figures 10 et 11 montrent une possibilité d'implantation de la station d'étirement permettant de réaliser les zones minces sous la forme de rubans orientés dans le sens de la longueur de la bande 10.

La figure 10 est une vue en coupe transversale sur laquelle on voit que la station d'étirement 240 comporte une pluralité de postes d'étirement 140 du type représenté sur les figures 6 à 9, qui sont alignés transversalement par rapport à la bande comme on le voit également sur la figure 11.

La figure 10 montre la situation à la fin du processus d'étirement par déformation des zones 11', situation analogue à celle de la figure 8 à ceci près que les outils de pincement 142A et 142B de chaque poste d'étirement ont déjà été écartés de la bande. On s'apprête à ramener dans le plan de la bande les zones déformées, à l'aide de moyens de préhension, par exemple des pinces 152 et 152', aptes à saisir les bords longitudinaux 10A et 10B de la bande 10, et à l'aide de moyens pour écarter lesdits moyens de préhension transversalement à la direction longitudinale de la bande. Par exemple, les pinces 152 sont montées sur des vérins qui les actionnent en va-et-vient transversalement à la longueur de la bande.

Comme on le voit sur la figure 11, ces moyens de préhension 152 et 152' sont avantageusement situés en aval de la station d'étirement 240, à quelque distance de cette dernière, de manière à, lorsqu'ils sont déplacés en étant écartés dans la direction transversale de la bande, augmenter progressivement la largeur de cette bande. Dans la portion de la bande située entre la station d'étirement 240 et les moyens de préhension 152 et 152', des guides (non représentés) peuvent être prévus pour guider l'écartement progressif de la bande. De plus, les moyens d'entraînement de la bande, qui pincent habituellement les bords longitudinaux de cette dernière, sont situés en aval des moyens de préhension 152 et 152'. On note encore que la bande peut être pincée sur toute sa longueur par une pince 151 juste à l'aval de la station 240 pour éviter que son écartement par les moyens 152 et 152' n'affecte son bon positionnement dans la station 240.

Comme on le voit sur la figure 11, les pistons 144 de la station 240 ont une forme allongée. Avantageusement, leur longueur est légèrement supérieure à un pas d'avancement de la bande, de telle sorte qu'à chaque actionnement, les pistons étirent une zone mince dont la longueur est légèrement supérieure à un pas d'avancement. Ainsi, on obtient une continuité dans les rubans minces 111, obtenus par étirement et disposés entre des rubans épais 109 dans lesquels seront thermoformés les récipients.

En aval de la portion de bande représentée sur la figure 11, on peut prévoir une station d'étirement du type présenté sur les figures 2 à 5 pour réaliser également des zones minces dans la direction transversale à la bande. On obtient ainsi un quadrillage de zones minces entre lesquelles sont délimitées des zones épaisses dans lesquelles les récipients pourront être thermoformés. Dans un tel cas, les intersections entre les rubans minces longitudinaux et les zones minces transversales sont étirées deux fois, d'abord dans la station 240, puis dans la station 40. On prend alors garde à ce que le double étirement réalisé dans ces zones d'intersection reste compatible avec la nécessaire résistance mécanique de la bande pour le thermoformage des récipients. Bien entendu, la boite de chauffe 14 peut être réalisée de manière à éviter de chauffer les zones étirées, qu'il s'agisse de rubans transversaux et/ou de rubans longitudinaux.

Pour favoriser l'étirement réalisé dans le poste d'étirement 140, on peut souhaiter chauffer la bande avant son passage dans ce poste. Ainsi, les outils de chauffe supérieurs 148 et inférieurs 150 sont schématisés sur les figures 6 à 9. On voit également un outil de chauffe 248 sur la figure 11 en amont de la station 240. Des moyens de refroidissement peuvent être disposés en aval de cette station.

Après le passage de la bande dans la station d'étirement 240, cette bande se présente sous la forme d'une alternance de rubans épais 109 et de rubans minces 111 longitudinaux.

On peut également réaliser une telle bande directement lors de sa fabrication par extrusion, par exemple à l'aide d'un outil d'extrusion 250 dont la buse d'extrusion présente une alternance de fentes minces 251 et de fentes larges 252 disposées de manière à former une bande continue. Avec une bande obtenue de cette sorte, on peut réaliser des zones minces dans le sens transversal en utilisant par exemple la station d'étirement 40 des figures 2 à 5.

Lorsque l'on réalise le thermoformage des récipients dans une bande présentant initialement une alternance de rubans épais et de rubans minces, la station de thermoformage des récipients est disposée de telle sorte que deux chambres de thermoformage disposées successivement dans le sens transversal de la bande soient écartées d'une distance correspondant au moins sensiblement à la largeur des rubans minces. L'espacement entre les chambres de thermoformage est alors calculé pour thermoformer les récipients dans les rubans épais de la bande, en préservant les zones de déchets dans les rubans minces.

## Revendications

1. Procédé de thermoformage de récipients (20) dans une bande de matériau thermoplastique (10) avancée pas à pas, dans lequel on thermoforme dans la bande au moins deux récipients (20) qui sont disposés côte à côte en étant séparées par une zone de déchets (11, 11'), dans lequel on étire localement la bande (10) pour former au moins une zone mince (11, 11' ; 111) de la bande entre des zones épaisses (9, 9' ; 109) de la bande ayant une épaisseur (E) supérieure à l'épaisseur (e) de la zone mince et on thermoforme les récipients (20) dans lesdites zones épaisses (9, 9' ; 109) de la bande, tandis que la zone de déchets est disposée dans la zone mince,
**caractérisé en ce que**, avant de thermoformer les récipients, on augmente l'écartement entre les zones épaisses.

2. Procédé selon la revendication 1, **caractérisé en ce qu'**on étire la bande de telle sorte qu'elle présente une alternance de rubans minces (111) et de rubans épais (109).

3. Procédé selon la revendication 1 ou 2, **caractérisé en ce que**, pour étirer une zone de déchets pour former une zone mince (11, 11'), on chauffe ladite zone.

4. Procédé selon la revendication 3, **caractérisé en ce que**, après avoir étiré la zone mince (11,11'), on refroidit ladite zone.

5. Procédé selon l'une quelconque des revendications 1 à 4, **caractérisé en ce qu'**on thermoforme au moins une première et une deuxième rangée transversales (20A, 20B) d'au moins un récipient dans deux zones épaisses (9, 9') de la bande (10), qui s'étendent transversalement au sens d'avancement (F) de la bande et qui sont séparées par une zone mince transversale (11, 11').

6. Procédé selon la revendication 5, **caractérisé en ce qu'**on thermoforme au moins la première rangée transversale d'au moins un récipient (20A), on fait avancer la bande (10) selon un pas d'avancement, et on thermoforme au moins la deuxième rangée transversale d'au moins un récipient (20B) de telle sorte que lesdites première et deuxième rangées soient séparées par une zone de déchets (11, 11') formant la zone mince transversale.

7. Procédé selon l'une quelconque des revendications 1 à 6, **caractérisé en ce que**, pour former une zone mince (11, 11'), on réalise une étape d'étirage en pinçant une première et une deuxième région (12A, 12B ; 12'A, 12'B) de la bande (10) situées de part et d'autre d'une zone de déchets à étirer et en écartant lesdites première et deuxième régions l'une de l'autre.

8. Procédé selon la revendication 7, **caractérisé en ce que**, lors de l'étape d'étirage, on écarte les première et deuxième régions (12A, 12B) de la bande l'une de l'autre en maintenant la deuxième région (12B) fixe et en déplaçant la première région (12A).

9. Procédé selon la revendication 7, **caractérisé en ce que**, lors de l'étape d'étirage, on fait avancer les première et deuxième régions simultanément, la course d'avancement de la deuxième région (12B, 12'B) située vers l'aval étant supérieure à la course d'avancement de la première région (12A ; 12'A) située vers l'amont.

10. Procédé selon la revendication 9, **caractérisé en ce que** la course d'avancement de la deuxième région (12B ; 12'B) est égale au pas d'avancement de la bande.

11. Procédé selon la revendication 5 et la revendication 7 ou 8, **caractérisé en ce qu'**on écarte les première et deuxième régions (12A, 12B ; 12'A, 12'B) de la bande l'une de l'autre dans la direction longitudinale de la bande (10).

12. Procédé selon l'une quelconque des revendications 1 à 11, **caractérisé en ce que** pour former une zone mince, on pince la bande (10) dans deux zones de pincement (12'A, 12'B) situées de part et d'autre d'une zone de déchets (11') à étirer, on étire la bande (10) entre lesdites zones de pincement en la déformant par rapport à son plan (P) et on ramène la zone déformée (11') dans le plan de la bande en augmentant en conséquence l'écartement entre les deux zones de pincement (12'A, 12'B).

13. Procédé selon la revendication 12, **caractérisé en ce qu'**on déforme la bande (10) en la repoussant à l'aide d'un piston de déformation (144) que l'on déplace sensiblement perpendiculairement au plan (P) de la bande.

14. Installation pour thermoformer des récipients comprenant des moyens pour faire avancer pas à pas une bande de matériau thermoplastique (10) et une station de thermoformage (16) apte à thermoformer dans la bande (10) au moins deux récipients (20) disposés côte à côte en étant séparés par une zone de déchets (11, 11'), l'installation comportant, disposés en amont de la station de thermoformage (16) dans le sens d'avancement de la bande, des moyens (40 ; 140 ; 240) pour étirer localement la bande (10) de manière à former au moins une zone mince (11, 11') entre des zones épaisses (9, 9' ; 109) dont l'épaisseur (E) est supérieure à l'épaisseur (e) de la zone mince et comportant des moyens (16 ; 40 ; 140 ; 240) pour thermoformer les récipients (20) dans les zones épaisses (9, 9' ; 109) de la bande en préservant la zone de déchets dans une zone mince (11, 11' ; 111),
**caractérisée en ce qu'**elle comporte des moyens pour augmenter l'écartement entre les zones épaisses, également disposés en amont de la station de thermoformage.

15. Installation selon la revendication 14, **caractérisée en ce qu'**elle comporte, en outre, des moyens (48, 50 ; 148 ; 248) pour chauffer la zone de déchets (11, 11') disposés, vers l'aval (F), tout au plus au niveau des moyens (40 ; 140 ; 240) pour étirer localement la bande (10).

16. Installation selon la revendication 15, **caractérisée en ce qu'**elle comporte, en outre, des moyens (52) pour refroidir la zone de déchets (11, 11') disposés en aval des moyens pour chauffer ladite zone.

17. Installation selon l'une quelconque des revendications 14 à 16, **caractérisée en ce que** les moyens pour étirer localement la bande (10) comprennent une station d'étirement (40) qui comporte un premier et un deuxième poste de pincement (42, 44) aptes à pincer la bande (10) de part et d'autre d'une zone de déchets (11A) et des moyens pour déplacer (D1) lesdits postes l'un par rapport à l'autre.

18. Installation selon la revendication 17, **caractérisée en ce que** les premier et deuxième postes de pincement (42, 44) sont disposés transversalement à la direction d'avancement (F) de la bande, respectivement en amont et en aval de la zone à étirer et **en ce que** les moyens pour déplacer les postes de pincement (42, 44) l'un par rapport à l'autre sont aptes à déplacer (D1) le premier poste de pincement (42) vers l'amont alors que le deuxième poste de pincement (44) reste fixe par rapport à la bande (10).

19. Installation selon la revendication 17, **caractérisé en ce que** les premier et deuxième postes de pincement (42, 44) sont disposés transversalement à la direction d'avancement (F) de la bande, respectivement en amont et en aval de la zone à étirer et **en ce que** les moyens pour déplacer les postes de pincement (42, 44) l'un par rapport à l'autre sont aptes à déplacer simultanément les premier et deuxième postes de pincement vers l'aval en déplaçant le deuxième poste de pincement selon une course supérieure à la course du premier poste de pincement.

20. Installation selon la revendication 15 et l'une quelconque des revendications 17 à 19, **caractérisée en ce que** les moyens (48, 50) pour chauffer la zone de déchets (11 A) comprennent au moins un outil de chauffe (48A, 50A), qui appartient à la station d'étirement (40) et qui est disposé entre le premier et le deuxième poste de pincement (42, 44).

21. Installation selon la revendication 16 et l'une quelconque des revendications 17 à 20, **caractérisée en ce que** les moyens pour refroidir la zone de déchets comprennent un outil de refroidissement (52) qui est disposé, dans la station d'étirement (40), en aval du deuxième poste de pincement (44).

22. Installation selon l'une quelconque des revendications 17 à 20, **caractérisée en ce que** la station d'étirement (40) est apte, lors d'un pas d'avancement de la bande, à accompagner le déplacement de la bande sur au moins une partie du pas d'avancement.

23. Installation selon l'une quelconque des revendications 14 à 22, **caractérisée en ce que** les moyens pour étirer localement la bande (10) comprennent une station d'étirement (140 ; 240) qui comporte des moyens de pincement (142) aptes à pincer la bande (10) de part et d'autre (12'A, 12'B) d'une zone de déchets (11'), des moyens (144) pour étirer la bande en la déformant par rapport à son plan (P) dans la zone de déchets et des moyens (152, 152') pour ramener la zone déformée dans le plan de la bande.

24. Installation selon la revendication 23, **caractérisée en ce que** les moyens de pincement (142) sont aptes à pincer deux régions (12'A, 12'B) de la bande (10) espacées dans la direction transversale de la bande et **en ce que** les moyens pour ramener la zone déformée dans le plan de la bande comprennent des moyens de préhension (152, 152') aptes à saisir les bords longitudinaux (10A, 10B) de la bande (10) et des moyens pour écarter lesdits moyens de préhension transversalement à la direction longitudinale de la bande.

25. Installation selon l'une quelconque des revendications 23 à 24, **caractérisée en ce que** la station d'étirement (140 ; 240) comporte un piston de déformation (144) mobile sensiblement perpendiculairement au plan (P) de la bande.

26. Installation selon l'une quelconque des revendications 14 à 23, comportant une boîte de chauffe (14) disposée en amont de la station de thermoformage (16), **caractérisée en ce que** la boîte de chauffe (14) comporte des moyens (58A, 60A) pour limiter le chauffage de la bande (10) dans les zones de déchets étirées (11) par rapport aux autres parties (9) de ladite bande.

## Claims

1. Method for thermoforming of containers (20) in a thermoplastic material strip (10) moving past step by step, wherein at least two containers (20), which are arranged side by side, while being separated by a scrap disposal zone (11, 11') are thermoformed in the strip, wherein the strip (10) is locally drawn to form at least a thin zone (11, 11'; 111) of the strip between thick zones (9, 9'; 109) of the strip having a thickness (E) greater than the thickness (e) of the thin zone, and the containers (20) are thermoformed in said thick zones (9, 9'; 109) of the strip, while the scrap disposal zone is arranged in the thin zone, **characterized in that** the spacing between the thick zones is increased before the containers are thermoformed.

2. Method according to Claim 1, **characterized in that** the strip is drawn so that it presents an alternation of thin bands (111) and thick bands (109).

3. Method according to Claim 1 or 2, **characterized in that**, in order to draw a scrap disposal zone to form a thin zone (11, 11'), said zone is heated.

4. Method according to Claim 3, **characterized in that**, after having drawn the thin zone (11, 11'), said zone is cooled.

5. Method according to any one of Claims 1 to 4, **characterized in that** at least a first and a second transversal row (20A, 20B) of at least one container are thermoformed in two thick zones (9, 9') of the strip (10), which extend crosswise in the advance direction (F) of the strip and which are separated by a transversal thin zone (11, 11').

6. Method according to Claim 5, **characterized in that** at least the first transversal row of at least one container (20A) is thermoformed, the strip (10) is advanced according to a advance rate, and at least the second transverse row of at least one container (20B) is thermoformed so that said first and second rows are separated by a scrap disposal zone (11, 11') forming the transverse thin zone.

7. Method according to any one of Claims 1 to 6, **characterized in that**, in order to form a thin zone (11, 11'), a drawing stage is carried out by gripping a first and a second area (12A, 12B; 12'A, 12'B) of the strip (10) located on either side of a scrap disposal zone to be drawn and by separating said first and second areas from one another.

8. Method according to Claim 7, **characterized in that**, during the drawing stage, the first and second areas (12A, 12B) of the strip are separated from one another by maintaining the second area (12B) stationary and by moving the first area (12A).

9. Method according to Claim 7, **characterized in that**, throughout the drawing stage, the first and second areas are made to advance simultaneously, the advance rate of the second area (12B, 12'B) located downstream being greater than the advance rate of the first area (12A; 12'A) located upstream.

10. Method according to Claim 9, **characterized in that** the advance rate of the second area (12B; 12'B) is equal to the advance rate of the strip.

11. Method according to Claim 5 and Claim 7 or 8, **characterized in that** the first and second areas (12A, 12B; 12'A, 12'B) of the strip are separated from one another in the longitudinal direction of the strip (10).

12. Method according to any one of Claims 1 to 11, **characterized in that** in order to form a thin zone, the strip (10) is gripped in two gripping zones (12'A, 12'B) located on either side of a scrap disposal zone (11') to be drawn, the strip (10) is drawn between said gripping zones by deforming it, relative to its plane (P) and the deformed zone (11') is returned into the plane of the strip by increasing, as a result, the spacing between the two gripping zones (12'A, 12'B).

13. Method according to Claim 12, **characterized in that** the strip (10) is deformed by repelling it, using a deformation piston (144) that is moved substantially perpendicularly to the plane (P) of the strip.

14. Installation for thermoforming containers, comprising means.to make a thermoplastic material strip (10) move past step by step and a thermoforming station (16) capable of thermoforming at least two containers (20) arranged side by side, while being separated by a scrap disposal zone (11, 11'), in the strip (10), said installation comprising, arranged upstream to the thermoforming station (16) in the advance direction of the strip, means (40; 140; 240) to locally draw the strip (10) so as to form at least a thin zone (11, 11') between thick zones (9, 9'; 109) whose thickness (E) is greater than the thickness (e) of the thin zone and comprising means (16; 40; 140; 240) to thermoform the containers (20) in the thick zones (9, 9'; 109) of the strip by preserving the scrap disposal zone in a thin zone (11, 11'; 111), **characterised in that** it has means to increase the spacing between said thick zones, also arranged upstream to the thermoforming station.

15. Installation according to Claim 14, **characterized in that** it also comprises means (48, 50; 148; 248) to heat the scrap disposal zone (11,11') arranged downstream (F), at most near the means (40; 140; 240) to locally draw the strip (10).

16. Installation according to Claim 15, **characterized in that** it also comprises means (52) to cool the scrap disposal zone (11, 11') arranged downstream from the means to heat said zone.

17. Installation according to any one of Claims 14 to 16, **characterized in that** the means to locally draw the strip (10) comprise a drawing station (40), which comprises a first and a second gripping means (42, 44), capable of gripping the strip (10) on either side of a scrap disposal zone (11A) and means for moving (D1) said gripping means relative to one another.

18. Installation according to Claim 17, **characterized in that** the first and second gripping means (42, 44) are arranged crosswise to the advance direction (F) of the strip, respectively upstream and downstream from the zone to be drawn and **in that** the means to move the gripping means (42, 44), relative to one another, are capable of moving (D1) the first gripping means (42) upstream, whereas the second gripping means (44) remains stationary relative to the strip (10).

19. Installation according to Claim 17, **characterized in that** the first and second gripping means (42, 44) are arranged crosswise to the advance direction (F) of the strip, respectively upstream and downstream from the zone to be drawn and **in that** the means to move the gripping means (42, 44), relative to one another, are capable of simultaneously moving the first and second gripping means downstream by moving the second gripping means at a rate greater than that of the first gripping means.

20. Installation according to Claim 15 and any one of Claims 17 to 19, **characterized in that** the means (48, 50) to heat the scrap disposal zone (11A) comprise at least a heating tool (48A, 50A), which belongs to the drawing station (40) and which is arranged between the first and the second gripping means (42, 44).

21. Installation according to Claim 16 and any one of Claims 17 to 20, **characterized in that** the means to cool the scrap disposal zone comprise a cooling tool (52) which is arranged, in the drawing station (40), downstream from the second gripping means (44).

22. Installation according to any one of Claims 17 to 20, **characterized in that** the drawing station (40) is capable, during an advance step of the strip, of accompanying the movement of the strip over at least part of the advance step.

23. Installation according to any one of Claims 14 to 22, **characterized in that** the means to draw the strip locally (10) comprise a drawing station (140; 240) which comprises gripping means (142) capable of gripping the strip (10) on either side (12'A, 12'B) of a scrap disposal zone (11'), means (144) to draw the strip in the scrap disposal zone, by deforming it relative to its plane (P) and means (152, 152') to return the deformed zone into the plane of the strip.

24. Installation according to Claim 23, **characterized in that** the gripping means (142) are capable of gripping two areas (12'A, 12'B) of the strip (10), spaced in the transversal direction of the strip and **in that** means to return the deformed zone into the plane of the strip comprise gripping means (152, 152') capable of seizing the longitudinal edges (10A, 10B) of the strip (10) and means to separate said gripping means crosswise to the longitudinal direction of the strip.

25. Installation according to any one of Claims 23 to 24, **characterized in that** the drawing station (140; 240) comprises a deformation piston (144) which moves substantially perpendicularly to the plane (P) of the strip.

26. Installation according to any one of Claims 14 to 23, comprising a heat chamber (14) arranged upstream to the thermoforming station (16), **characterized in that** the heat chamber (14) comprises means (58A, 60A) to limit heating of the strip (10) in the drawn scrap disposal zones (11) relative to the other parts (9) of said strip.

## Patentansprüche

1. Verfahren zum Thermoformen von Behältern (20) in einer schrittweise vorgeschobenen Bahn aus thermoplastischem Material (10), bei dem wenigstens zwei Behälter (20), die nebeneinander angeordnet und durch einen Restbereich (11, 11') voneinander getrennt sind, in der Bahn thermogeformt werden, bei dem die Bahn (10) lokal gedehnt wird, um wenigstens einen dünnen Bereich (11, 11'; 111) der Bahn zwischen dicken Bereichen (9, 9'; 109) der Bahn zu formen, die eine Dicke (E) aufweisen, die größer als die Dicke (e) des dünnen Bereichs ist, und die Behälter (20) in den dicken Bereichen (9, 9'; 109) der Bahn thermogeformt werden, während in dem dünnen Bereich der Restbereich angeordnet ist,
**dadurch gekennzeichnet, dass** vor dem Thermoformen der Behälter der Abstand zwischen den dicken Bereichen vergrößert wird.

2. Verfahren nach Anspruch 1,
**dadurch gekennzeichnet, dass** die Bahn derart gedehnt wird, dass sie abwechselnd dünne Streifen (111) und dicke Streifen (109) aufweist.

3. Verfahren nach Anspruch 1 oder 2,
**dadurch gekennzeichnet, dass** zum Dehnen eines Restbereichs zur Formung eines dünnen Bereichs (11, 11') dieser Bereich erwärmt wird.

4. Verfahren nach Anspruch 3,
**dadurch gekennzeichnet, dass** nach dem Dehnen des dünnen Bereichs (11, 11') dieser Bereich abgekühlt wird.

5. Verfahren nach einem der Ansprüche 1 bis 4,
**dadurch gekennzeichnet, dass** wenigstens eine erste und eine zweite Querreihe (20A, 20B) mit wenigstens einem Behälter in zwei dicken Bereichen (9, 9') der Bahn (10) thermogeformt werden, die in Vorschubrichtung (F) der Bahn quer verlaufen und durch einen quer verlaufenden dünnen Bereich (11, 11') voneinander getrennt sind.

6. Verfahren nach Anspruch 5,
**dadurch gekennzeichnet, dass** wenigstens die erste Querreihe mit wenigstens einem Behälter (20A) thermogeformt wird, die Bahn (10) in einem Vorschubschritt vorwärts bewegt wird und wenigstens die zweite Querreihe mit wenigstens einem Behälter (20B) solchermaßen thermogeformt wird, dass die erste und die zweite Reihe durch einen Restbereich (11, 11'), der den quer verlaufenden dünnen Bereich bildet, voneinander getrennt sind.

7. Verfahren nach einem der Ansprüche 1 bis 6,
**dadurch gekennzeichnet, dass** zum Formen eines dünnen Bereichs (11, 11') ein Dehnschritt ausgeführt wird, wobei ein erster und ein zweiter Bereich (12A, 12B; 12'A, 12'B) der Bahn (10), die zu beiden Seiten eines zu dehnenden Restbereichs angeordnet sind, festgeklemmt und der erste und der zweite Bereich voneinander entfernt werden.

8. Verfahren nach Anspruch 7,
**dadurch gekennzeichnet, dass** bei dem Dehnschritt der erste und der zweite Bereich (12A, 12B) der Bahn voneinander entfernt werden, indem der zweite Bereich (12B) ortsfest gehalten und der erste Bereich (12A) verschoben wird.

9. Verfahren nach Anspruch 7,
**dadurch gekennzeichnet, dass** bei dem Dehnschritt der erste und der zweite Bereich gleichzeitig vorwärts bewegt werden, wobei der Vorschubweg des vorne angeordneten zweiten Bereichs (12B, 12'B) größer ist als der Vorschubweg des hinten angeordneten ersten Bereichs (12A; 12'A).

10. Verfahren nach Anspruch 9,
**dadurch gekennzeichnet, dass** der Vorschubweg des zweiten Bereichs (12B, 12'B) dem Vorschubschritt der Bahn entspricht.

11. Verfahren nach Anspruch 5 und Anspruch 7 oder 8,
**dadurch gekennzeichnet, dass** der erste und der zweite Bereich (12A, 12B; 12'A, 12'B) der Bahn in Längsrichtung der Bahn (10) voneinander entfernt werden.

12. Verfahren nach einem der Ansprüche 1 bis 11,
**dadurch gekennzeichnet, dass** die Bahn (10) zum Formen eines dünnen Bereichs in zwei Klemmbereichen (12A, 12'B), die zu beiden Seiten eines zu dehnenden Restbereichs (11') angeordnet sind, festgeklemmt wird, die Bahn (10) zwischen diesen Klemmbereichen gedehnt wird, wobei sie bezüglich ihrer Ebene (P) verformt wird, und der verformte Bereich (11') wieder in die Ebene der Bahn zurückgebracht wird, wodurch der Abstand zwischen den zwei Klemmbereichen (12'A, 12'B) vergrößert wird.

13. Verfahren nach Anspruch 12,
**dadurch gekennzeichnet, dass** die Bahn (10) **dadurch** verformt wird, dass sie mit Hilfe eines Verformungsstempels (144), der im Wesentlichen lotrecht zur Ebene (P) der Bahn bewegt wird, verschoben wird.

14. Anlage zum Thermoformen von Behältern, mit Mitteln zum schrittweisen Vorschub einer Bahn aus thermoplastischem Material (10) und einer Thermoformstation (16), die in einer Bahn (10) wenigstens zwei Behälter (20), die nebeneinander angeordnet und durch einen Restbereich (11, 11') voneinander getrennt sind, thermozuformen vermag, wobei die Anlage vor der Thermoformstation (16) in Vorschubrichtung der Bahn angeordnet Mittel (40; 140; 240) zum lokalen Dehnen der Bahn (10) umfasst, um wenigstens einen dünnen Bereich (11, 11') zwischen dicken Bereichen (9, 9'; 109) zu formen, deren Dicke (E) größer ist als die Dicke (e) des dünnen Bereichs, und die Mittel (16; 40; 140; 240) zum Thermoformen der Behälter (20) in den dicken Bereichen (9, 9'; 109) der Bahn umfasst, wobei der Restbereich in einem dünnen Bereich (11, 11'; 111) bestehen bleibt,
**dadurch gekennzeichnet, dass** sie Mittel zum Vergrößern des Abstands zwischen den dicken Bereichen umfasst, die ebenfalls vor der Thermoformstation angeordnet sind.

15. Anlage nach Anspruch 14,
**dadurch gekennzeichnet, dass** sie ferner Mittel (48, 50; 148; 248) zum Erwärmen des Restbereichs (11, 11') umfasst, die stromabwärts (F) allerhöchstens bei den Mitteln (40; 140; 240) zum lokalen Dehnen der Bahn (10) angeordnet sind.

16. Anlage nach Anspruch 15,
**dadurch gekennzeichnet, dass** sie ferner Mittel (52) zum Abkühlen des Restbereichs (11, 11') umfasst, die nach den Mitteln zum Erwärmen dieses Bereichs angeordnet sind.

17. Anlage nach einem der Ansprüche 14 bis 16,
**dadurch gekennzeichnet, dass** die Mittel zum lokalen Dehnen der Bahn (10) eine Dehnstation (40) umfassen, die eine erste und eine zweite Klemmstation (42, 44) aufweist, welche die Bahn (10) auf beiden Seiten eines Restbereichs (11A) festzuklemmen vermögen, sowie Mittel zum Verschieben (D1) der Stationen bezüglich einander.

18. Anlage nach Anspruch 17,
**dadurch gekennzeichnet, dass** die erste und die zweite Klemmstation (42, 44) quer zur Vorschubrichtung (F) der Bahn vor bzw. nach dem zu dehnenden Bereich angeordnet sind, und dass die Mittel zum Verschieben der Klemmstationen (42, 44) bezüglich einander imstande sind, die erste Klemmstation (42) stromaufwärts zu verschieben (D1), während die zweite Klemmstation (44) bezüglich der Bahn (10) ortsfest bleibt.

19. Anlage nach Anspruch 17,
**dadurch gekennzeichnet, dass** die erste und die zweite Klemmstation (42, 44) quer zur Vorschubrichtung (F) der Bahn vor bzw. nach dem zu dehnenden Bereich angeordnet sind, und dass die Mittel zum Verschieben der Klemmstationen (42, 44) bezüglich einander imstande sind, die erste und die zweite Klemmstation gleichzeitig stromabwärts zu verschieben, wobei die zweite Klemmstation über eine größere Strecke verschoben wird als die erste Klemmstation.

20. Anlage nach Anspruch 15 und einem der Ansprüche 17 bis 19,
**dadurch gekennzeichnet, dass** die Mittel (48, 50) zum Erwärmen des Restbereichs (11A) wenigstens ein Heizwerkzeug (48A, 50A) umfassen, das zu der Dehnstation (40) gehört und zwischen der ersten und der zweiten Klemmstation (42, 44) angeordnet ist.

21. Anlage nach Anspruch 16 und einem der Ansprüche 17 bis 20,
**dadurch gekennzeichnet, dass** die Mittel zum Abkühlen des Restbereichs ein Kühlwerkzeug (52) umfassen, das in der Dehnstation (40) nach der zweiten Klemmstation (44) angeordnet ist.

22. Anlage nach einem der Ansprüche 17 bis 20,
**dadurch gekennzeichnet, dass** die Dehnstation (40) bei einem Vorschubschritt der Bahn den Vorschub der Bahn auf wenigstens einem Teil des Vorschubschritts zu begleiten vermag.

23. Anlage nach einem der Ansprüche 14 bis 22,
**dadurch gekennzeichnet, dass** die Mittel zum lokalen Dehnen der Bahn (10) eine Dehnstation (140; 240) umfassen, die Klemmmittel (142) aufweist, welche die Bahn (10) auf beiden Seiten (12'A, 12'B) eines Restbereichs (11') festzuklemmen vermögen, sowie Mittel (144) zum Dehnen der Bahn, die diese bezüglich ihrer Ebene (P) in dem Restbereich verformen, und Mittel (152, 152'), um den verformten Bereich wieder in die Ebene der Bahn zurückzubringen.

24. Anlage nach Anspruch 23,
**dadurch gekennzeichnet, dass** die Klemmmittel (142) zwei in Querrichtung der Bahn beabstandete Bereiche (12'A, 12'B) der Bahn (10) festzuklemmen vermögen, und dass die Mittel zum Zurückbringen des verformten Bereichs in die Bahnebene Greifmittel (152, 152') umfassen, welche die Längsränder (10A, 10B) der Bahn zu fassen vermögen, sowie Mittel zum Spreizen der Greifmittel quer zur Längsrichtung der Bahn.

25. Anlage nach einem der Ansprüche 23 bis 24,
**dadurch gekennzeichnet, dass** die Dehnstation (140; 240) einen Verformungsstempel (144) aufweist, der im Wesentlichen lotrecht zur Ebene (P) der Bahn beweglich ist.

26. Anlage nach einem der Ansprüche 14 bis 23, mit einem vor der Thermoformstation (16) angeordneten Heizraum (14),
**dadurch gekennzeichnet, dass** der Heizraum (14) Mittel (58A, 60A) aufweist, die das Erwärmen der Bahn (10) in den gedehnten Restbereichen (11) bezüglich der anderen Teile (9) der Bahn begrenzen.
